(19) Europäisches Patentamt
European Patent Office
Office européen des brevets

(11) **EP 2 071 465 A1**

(12) **EUROPEAN PATENT APPLICATION**

(43) Date of publication:
**17.06.2009 Bulletin 2009/25**

(51) Int Cl.:
*G06F 11/34* *(2006.01)*

(21) Application number: **07123233.4**

(22) Date of filing: **14.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **ITI Scotland Limited**
**Glasgow G2 2LB (GB)**

(72) Inventors:
• **Russell, George**
**Edinburgh, EH1 3HP (GB)**
• **Richards, Andrew**
**Edinburgh, EH1 3HP (GB)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **Techniques for program performance analysis**

(57) The application describes techniques for measuring metrics relating to the execution of a computer program and provides program analysis tools and methods for conducting program analysis. In particular, the present invention relates to an execution environment which, in addition to being able to execute instructions expressed in a programming language, is operable to carry out measurements relating to the execution of those instructions. The application describes profiling techniques which are particularly, but not exclusively, provided in conjunction with an execution environment which is distributed over several machines.

Figure 1

**Description**

The present invention relates to techniques for measuring metrics relating to the execution of a computer program and provides program analysis tools and methods for conducting program analysis. In particular, the present invention relates to an execution environment which, in addition to being able to execute instructions expressed in a programming language, is operable to carry out measurements relating to the execution of those instructions. Furthermore, the present invention relates to profiling techniques which are particularly, but not exclusively, provided in conjunction with an execution environment which is distributed over several machines.

Program analysis tools, known as profilers, that measure the performance or behaviour of a program as it runs, are known. Such tools typically involve the measurement of one or more metrics relating to the performance of a program, such metrics include memory usage or the frequency and duration of function calls (which provides an indication about resource usage or CPU time). The metrics can then be presented in the format of a report or summary, to allow an insight into how a program may be usefully optimised. For example, previously considered profilers are operable to time or sample the execution of a computer program, in order to identify so-called "hot spots" in the program - i.e. where the program spends a significant proportion of the total execution time. Furthermore, network profilers operable to measure or sample network traffic to identify information about the usage patterns of a network channel during the distributed execution of a computer program are also known.

The applicability and usefulness of known program analysis tools is limited in a number of key respects. For example, known profilers tend to conduct performance measurements at the level of machine code, i.e. code which has been translated by a compiler from a high-level language into compiled machine code. Examples of such profilers include Intel's VTune, Intel's Thread Profiler and AMD's CodeAnalyst. These tools present timing information together with symbolic information (e.g. function names) relating to the execution of a program.

A problem with machine code profilers is that they may not be able to relate gathered measurements to the input program being executed. For example, programs written in so-called interpreted languages (i.e. high-level languages which are executed directly, by means of an interpreter, without preliminary translation into machine code) cannot be easily profiled using machine code profilers, since the profiler will reveal information about how the program which implements the interpreter is performing, rather than how the input program being executed by the interpreter is performing. Furthermore, machine code profilers provide very limited capability for reporting the performance characteristics of a program executing in a distributed system as a whole.

It is desirable to provide improved profiling techniques which more readily facilitate the measurement of performance metrics. It is particularly, but not exclusively desirable to be able to gather metrics relating to the execution of an interpreted implementation of a program.

According to a first aspect of the present invention there is provided a system comprising an execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution; and wherein said execution environment generation means is adapted to obtain performance metrics relating to the performance of program component(s) being executed therein.

Preferably, the system comprises multiple execution means for executing program components, e.g. multiple interpreters, and these execution means may be distributed between a plurality of machines.

According to a second aspect of the present invention, there is provided an execution environment operable to execute one or more components of a computer program in a plurality of sequential frames of execution, wherein the execution environment is operable to: i) allow communication between one said component and another said component in different frames of execution; and ii) to prevent communication between one said component and another said component in the same frame of execution, and wherein said execution environment is further operable to obtain performance metrics relating to the performance of program component(s) being executed therein.

According to a third aspect of the present invention, there is provided a tool for obtaining performance metrics relating to the execution of a computer program, said tool comprising an execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution, wherein said execution environment generation means is adapted to be operable to obtain said performance metrics relating to the performance of said program component(s) being executed therein.

Advantageously, according to embodiments of the present invention, the capability to obtain, e.g. measure, performance metrics relating to the performance, or behaviour, of an executing computer program is implemented as part of the execution environment itself. For example, the execution environment generation means, e.g. program code which defines and, when run on a computer, implements the structure and operation of the execution environment may be adapted to include instructions which facilitate the measurement of the desired resource consumption parameters. As such, it should be appreciated that the ability to gather metrics relating to the performance of program execution it is not implemented within the frame structure of the execution environment, but at the level below, where the frame structure of the implementation environment is itself implemented. This is in contrast to most known profiling techniques which typically involve programmers building profiling checks into the input program itself, e.g. by script insertion, or running a separate profiling tool alongside a candidate program as it executes. Thus, one of the key features of the present invention resides in the way in which profiler functionality is implemented as a feature of the execution environment. Critically, the execution environment is operable to profile the execution of one or more of the program components as desired during the execution of a computer program, in order to directly obtain, or gather, from the environment itself various measurements about that execution. In effect, the capability to perform profiling tasks is built into, or forms part of, the execution environment. As a consequence, embodiments of the present invention are particularly suited to profiling the execution of an interpreted implementation of a language; the profiling functions being correctly conducted on the input program running within the execution environment, rather than on the program which implements the execution environment. Furthermore, in providing profiling support as part of a runtime system, it is advantageously possible to gather information relating to the internal structure and actions of the interpreter, to thereby record meaningful statistics for the program being executed e.g. to report the actions of the execution environment, or runtime, with respect to locations and actions within the input program.

According to a particularly preferred embodiment, the computer system is provided with a store means operable to store, or record the performance metrics obtained by the execution environment. Report generation means are also preferably provided, operable to generate a report summarising the metrics obtained from the execution means comprised in a given system for subsequent analysis and/or display.

Preferably, a user will be able to execute a program within the execution environment of an embodiment of the present invention with, or without, profiling support (i.e. performance measuring capabilities) enabled. Thus, the capability to measure performance metrics can be enabled or disabled (either dynamically, or statically) to give an interpreter that profiles the program it executes to gather various sets of statistics, or executes at full speed without profiling. It is expected that the overhead of profiling is proportional to the amount of profiling enabled e.g. the quantity of data gathered.

The measurement of metrics relating to the performance of an executing program preferably involves gathering information about one or more of: processor usage, memory consumption, bandwidth consumption and high level operations in the input program, e.g. the actions of the input program. This information can be stored and collated, e.g. in a central data store means, and queried/processed to provide resource accounting or resource consumption analysis for the system as a whole, which may comprise an execution environment comprised in a single machine, or distributed over a plurality of machines. In the case of a distributed system, analysis may be conducted for one or more of the machines comprised in the distributed system. Preferred embodiments of the present invention therefore exploit knowledge of the structure of the execution environment, the network profile and the input program, in order to present a unified view of the performance characteristics of applications running therein or in the runtime system of a given server or a client. According to a preferred embodiment of the present invention there is provided an execution environment operable to gather and/or process and/or compile metrics relating to the execution of a program in terms of the processor time consumed, the memory allocated for storage, and the network bandwidth consumed. The provision of a unified profiler for gathering metrics relating to all of the CPU consumption, memory consumption and network consumption is especially desirable, allowing a higher level of understanding of a distributed program's performance to be gained whilst circumventing the need to rely on several, disparate, profilers to gather different types of data. Furthermore, according to a particularly preferred embodiment, the gathered metrics are related to operations/actions arising in the input program.

It will be appreciated that the measurement of performance metrics may be conducted on the basis of an event based protocol, or may be statistical.

In United Kingdom Patent Application No. 0712496.9, the entire content of which is incorporated herein by way of reference thereto, we describe program execution techniques which are particularly suited to the execution of an interpreted language, such as a scripting language. A complete copy of GB 0712496.9 is filed with the present application.

According to the teaching of GB 0712496.9 the execution of one or more components of a computer program is advantageously carried out in a plurality of sequential frames of execution, wherein the execution environment is further operable to:

i) allow communication between one said component and another said component in different frames of execution; and ii) to prevent communication between one said component and another said component in the same frame of execution. Also according to the teaching of GB 0712496.9, it is advantageous for the execution environment to be operable such that the execution of one or more components of a computer program is carried out in a plurality of sequential frames of execution, the execution environment being further operable to process communications between components of the computer program in a predetermined order.

The internal structure of the execution environment described in GB 0712496.9 is very different to previously considered program execution techniques. Embodiments of the present invention rely on an execution environment according to the teaching of GB 0712496.9, which is advantageous in that it provides a structurally continuous environment which can be exploited to provide profiling capabilities even throughout a distributed system.

According to the teaching of GB 0712496.9, it is desirable to implement a runtime system which is structured to facilitate the execution of program code in "frames", i.e. units of time or work, with at least one component of the program comprised in each frame of execution. The execution environments proposed in GB 0712496.9 are highly advantageous in that they facilitate the execution of a computer component with a high degree of determinism. This means that if corresponding components, e.g. objects (for example implementing a character in a game) in the same state execute the same code on two different computers, or at two different times, then the new state of the object will advantageously be identical on both machines or at both times.

Profiling is particularly difficult to conduct in a distributed system comprising a plurality of machines which interact with each other, within the domain of a computer program, via a network (e.g. a local area network (LAN) or the internet). In these circumstances, a set of disparate tools are currently required to gather different types of information about the performance of a distributed computer program as a whole, each tool or program presenting measurements separately and according to its own format. As such, it can be very difficult to gain a full and proper understanding of the performance of a distributed computer program, such as a massive multi-player online game (MMOG), due to the variety of tools currently required for gathering performance data and the many different areas in which performance problems can arise.

Given the growing desire for multiple users to share a virtual world and to interact with each other within that virtual world, often in real time, there is growing need to improve the understanding of the performance a computer program executing within a distributed system comprising several machines. It will be appreciated that distributed program execution introduces several performance characteristics pertaining to the network which can usefully be measured, in addition to the performance data pertaining to processor and memory usage, in order to analyse the overall performance of the program. Distribution of the execution environment has the effect of limiting response times as well as the speed with which a response can be made once a request is received. Thus, data relating to latency and response times, as well as bandwidth consumption, advantageously allows the performance of the network to be assessed. Preferred embodiments of the present invention therefore seek to facilitate the measurement of several important characteristics relating to the performance of a distributed program, in a unified and coherent manner. In particular, it is desirable to be able to provide a single performance analysis tool, and corresponding method, able to gather information about the network performance, for example bandwidth consumption, time of network operations (e.g. latency and response times), of a distributed program in addition to data pertaining to processor and memory usage.

According to a preferred embodiment of the present invention, the computer system comprises a plurality of machines which interact with each other via a network, wherein the execution environment is distributed between said plurality of machines. Moreover, the execution environment is preferably adapted to obtain metrics relating to the performance of the network, the processor usage and the memory usage. Thus, embodiments of the present invention are particularly suitable for gathering metrics relating to the distributed execution of a computer program over several machines. As such, it is possible for a program developer, for example, to readily tune the performance of a computer program executing in a distributed system, for example by adjusting the way in which program components are divided and/or duplicated, on the different machines (including both server (s) and client(s)) comprised in the system. Moreover, a program developer will advantageously be able to use a single tool to understand the performance characteristics of the whole distributed program, rather than a set of disparate programs that do not display performance measurements in a unified and coherent manner. Furthermore, using the gathered information, a distributed program such as an MMOG can be adapted to execute more efficiently in terms of bandwidth and processor time.

A further advantage of the present invention is that performance metrics can be obtained and presented to provide resource accounting on a per-frame basis. This highly advantageous feature provides the capability to produce a fine grained, detailed, performance and resource analysis of a computer program. Thus, according to preferred embodiments of the present invention, any spikes in resource consumption, which may cause the program execution to fall below an expected frame rate, may be readily identified. It will be appreciated that it is very important for a distributed computer program, such as a distributed computer game or MMOG, to maintain the expected frame rate.

In addition to facilitating profiling support on a per-frame basis, preferred embodiments of the present invention are also advantageous in that they allow resource consumption, for example, to be profiled on a per-component basis, e.g. per program object (of which there may be many thousand within a given program). This is in contrast to conventional profilers in which resource usage, primarily CPU time, is typically accounted for on the basis of functions within a program, potentially also accounted for on the basis of functions plus details of the operating system (OS) level thread calling them. However, simply measuring the frequency and duration of function calls provides insufficient information to allow a program developer to properly analyse the program execution since, in multi-threaded programs, functions may be called from many threads, with the consequence that if measurements appear to be outside normal range, it is difficult to identify why. The ability to provide profiling support on a per-component basis is therefore advantageous in that it is possible to identify, for example, not only where the resource consumption occurs, but on whose (i.e. which component's) behalf, or to identify not only where the program spends a significant amount of its time, but why it spends that time there (i.e. how it got there).

According to embodiments of the present invention, the communication between components may include at least one of sending a message or reading at least a portion of the state of another component. The communication may take place between components of adjacent frames or between components of frames which are more than one frame apart. Dividing the program into sequential frames also advantageously allows for highly parallel execution of program components. Therefore, as the number of components in a program increases, execution of the program code can be readily distributed over multiple processors when a single processor is no longer sufficient. As such, different program components, or different objects, can be readily executed in parallel.

Preferably, messages can be sent from object to object or between the outside world (*e.g.* the user, or a C++ program) and an object. Messages allow communication between objects within the system and the outside world. They can be transmitted across a network. They are delivered to a particular frame number and target object. According to embodiments of the present invention which are operable to prevent communication between components in the same frame, if an object sends a message, then the message can only be received in a different, and subsequent, frame. Receipt of messages by an object may preferably be implemented by means of a queue of incoming messages provided for each object at each frame. The queue should preferably be ordered using a deterministic ordering method, so as to maintain network consistency.

A deterministic ordering method involves the entire set of messages received for a given object in a given frame being sorted on the basis of

    1) order of sending; and
    2) the id of the sender.

Therefore, if an object sends two messages: A and then B, the recipient will receive A and then B in that order. Thus, the order of arrival is the same as the order of sending. If two objects (1) and (2) each send two messages A1 and B1, and A2 and B2 the recipient will receive them in the order A1 B1 and then A2 B2, so that order is preserved locally (in the messages from a single sender) and globally (messages from multiple senders are ordered by the id of the sender). In the case of multiple senders, the act of sending may overlap e.g. objects (1) and (2) may execute concurrently. There is preferably an additional ordering on the id given to a client, to allow user input messages to also be sorted e.g. if two clients send a user input message to the same object, the order is determined by the client id.

The outside world within the context of the present invention is software written in other languages that do not follow the preferred conditions for writing a program to be executed within an execution environment of the proposed invention. The outside world does important work like receiving information from the user, transmitting streams of data over the network, or displaying results back to the user. The outside world should preferably not violate preferred conditions of the system that will be discussed later. The outside world can send messages to objects within a system embodying the present invention, may keep references to objects within the system, create objects in the system, create sets of objects to duplicate or execute speculatively, or read the state of objects within the system. The outside world cannot modify the state of any object within the system, although it can be called via functions. However, in order to ensure such function calls do not introduce the potential for a divergence between the execution of corresponding objects on different machines, they should preferably return exactly the same result on every computer in the system whenever the parameters to the function are the same and the frame number the function is called on is the same. Such function calls should preferably not be able to modify the local state of the calling object.

The division of a computer program into a series of frames, i.e. units of time or work, advantageously enables synchronization so that the state of program components may be consistently defined. According to preferred embodiments of the present invention, objects can only change their visible state within a frame and can only read the values of other objects at the end of the previous frame. Messages are also attached to, or associated with, a given frame of the computer program. Frames could be attached to a clock, so that a new frame is started every 1/50$^{th}$ of a second (for example) or, a new frame could start as soon as the last frame is finished or, frames could be executed in a pipeline with individual object execution starting whenever enough input data is available for the execution to complete.

Frames could also be hierarchical, wherein a universal frame clock is broken down into sub-frames. This configuration would advantageously allow a set of objects to operate to a much faster frame counter for a particular algorithm that is distributed across multiple objects. It is envisaged that the coarsest granularity of frame would correspond to network frames, while the finest granularity of preferred frame would correspond to operations on the current processor. According to embodiments of the present invention, the state of an object is only visible at the start or end of a frame and, therefore the state is the same at the start of one frame as it was at the end of the previous frame.

It will be appreciated that, according to embodiments of the present invention which rely upon an execution environment operable to prevent intra-frame communication, the state of the system at the start of a frame is a function of only the state of the system at the end of the previous frame and any external messages into the system. The state of the system at a frame start consists of the state of all objects at that frame start and any messages sent from the previous frame. Thus, in respect of a computer program comprising a plurality of objects, it is possible to define a subset of all the objects in the system. The subset may be a proper subset or, in the case where there is one object, a non-trivial subset. The state of the subset of the objects in the system at a particular frame will be a function of the state of those objects at the start of the previous frame, and all messages sent into the subset of the objects from the previous frame.

Formally, if $O_{n,i}$ is the state of object $i$ at the start of frame $n$, and $M_{n,i}$ is the list of messages sent from object $i$ from frame $n$ to frame $n+1$, and $f_{n,i}$ is the function that corresponds to the behaviour of object $i$ in frame $n$, then:

$$(O_{n+1,i}, M_{n+1,i}) = f_{n+1,i}(O_{n,i}\ M_{n,i})$$

This is a function of frame $n$ that is returning the state of frame $n+1$. As can be seen, the entire state of frame $n+1$ is a function only of frame $n$. This means that there is no interdependency within frame $n$, so all objects in frame $n$ can advantageously be executed in parallel.

Preferably, each frame of each instance of an object comprises object data and an object execution point. At the start and end of every frame, the execution point will therefore be at a next-frame statement, except in the case of termination of computation, when the execution point will either be error or quit. The next frame statement is the last instruction to be executed in a frame. Preferably, in use, an execution environment embodying the present invention is operable to execute each frame up to and including the next frame statement. Thus, the object state is modified iteratively whenever the object's code is executed. However, according to preferred embodiments the iterative changes and intermediate states are never visible to any other objects and only the state at the end of a previous frame is visible to other objects.

In any of the above embodiments or aspects, the various features may be implemented in hardware, or as software modules running on one or more processors. Features of one aspect or embodiment may be applied to any of the other aspects or embodiments.

The invention also provides a computer program or a computer program product for implementing the techniques described herein, and a computer readable storage medium having stored thereon a program for implementing the techniques described herein. A computer program embodying the present invention may be stored on a computer-readable medium, or it could, for example, be in the form of signal such as a downloadable data signal provided from an internet website, or it could be in any other form.

For a better understanding of the present invention, and to show how the same may be carried into effect, reference will now be made, by way of example, to the accompanying drawings in which:

Figure 1 shows an embodiment of the present invention;

Figure 2 illustrates the internal workings of an interpreter, according to an embodiment of the present invention;

Figure 3 is a flow diagram illustrating an execution procedure according to the principles of the present invention; and

Figure 4 is diagram of program execution.

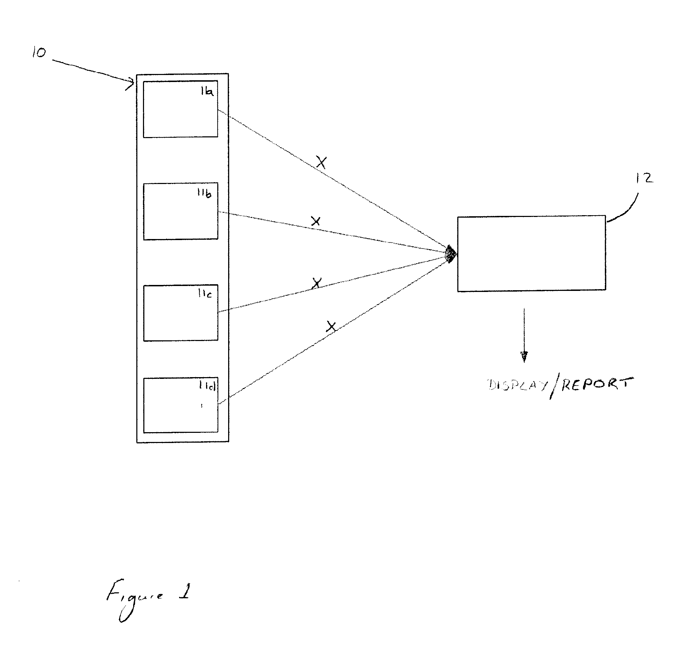

Figure 1 shows an execution environment, or runtime system, 10 comprising four execution means, (which in this example can be considered to be interpreters), one per CPU, 11 a, 11 b, 11 c and 11 d. It will be appreciated that the execution environment may be distributed over several machines which interact with each other via a network. Each interpreter is operable to execute one or more program objects in a plurality of sequential frames of execution. Furthermore, the execution environment is operable to: i) allow communication between one said component and another said component in different frames of communication; and ii) to prevent communication between one said component and another said component in the same frame of execution.

In addition to being able to execute instructions comprised in a program input to the execution environment, each interpreter 11 is able to gather metrics relating to the performance of the computations, or program objects, being executed therein. As shown in Figure 1, a stream of metrics with an associated context are sent from each interpreter to a common, or shared, data store 12, which forms part of a profile information system. Alternatively, the data store may be operable to retrieve, or "pull", metrics to it. In this case, for example, each interpreter may be operable to maintain its own local data store, whilst the data store 12 is operable to aggregate these. Thus data store 12 stores received, or retrieved, measurements together with contextual information for later analysis, summarization and reporting. It should be appreciated that the profile information system is likely to have to operate in the face of concurrency (e.g. being used by multiple interpreter instances) and may also have to cope with data being replicated per interpreter so that the results of each information system must be combined before reporting. Preferably, therefore, the system is operable to generate reports and synthesize various metrics from the raw data recorded.

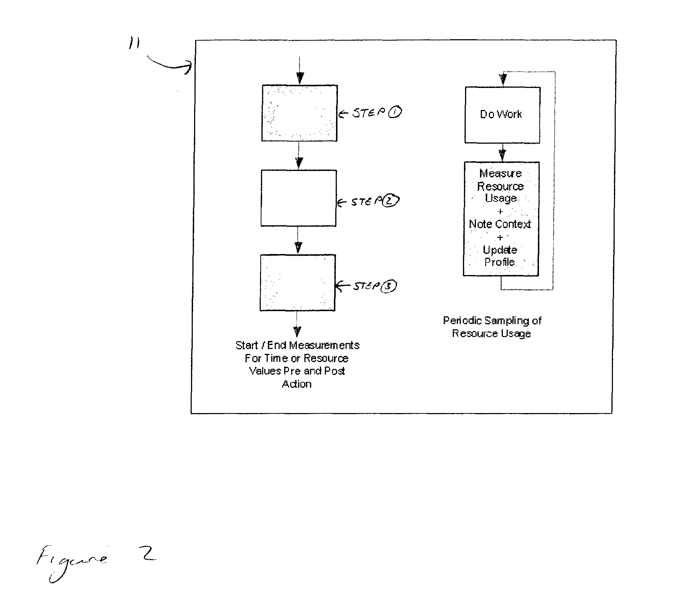

Figure 2 illustrates the internal workings of an interpreter, generally designated 11, according to an embodiment of the present invention. In particular, Figure 2 shows an example of a sequence of actions conducted by the interpreter in order to obtain measurements pertaining to the execution of a given action.

Each interpreter within the system is operable to carry out sequences of actions, for example, executing program instructions. Some of these actions correspond to the start of an (potentially higher level) action (e.g. a method call) for which it is desired to measure the time or resource consumption of. As shown in Figure 2, at step 1, the interpreter will note that an action to be profiled has begun and will take an initial measurement (e.g. time, or space consumption, or size of data sent so far) and note the context of that measurement (e.g. what part of the input program this action represents). At step 2, the interpreter will then perform the action as normal.

At step 3, once the action is complete, the interpreter notes the action is ended, and takes a final measurement. It then records in the profile information the context (e.g. object identity, frame, source location in input program and interpreter identity) and measurement (typically, elapsed time or change in space requirements). Sequences of actions can be nested, so it is possible to record, for example: start of action1, start of action2, end of action2, end of action 1.

An interpreter is invoked at the start of each frame of program execution. An interpreter is active while it has objects to execute. Once its supply of objects to execute is exhausted, it becomes inactive. The exhaustion of objects to execute typically indicates the end of a frame. When an interpreter is invoked, it is told what context it has been invoked in - a given frame, to execute a given object, and the given object is to be executed from the specified point (e.g. the specified instruction). The interpreter can perform profiling actions at the start and end of executing an object (e.g. sampling).

With respect to the right hand side of Figure 2, the "do work" block represents the process of executing an object within a frame and the interpreter can measure properties of the execution environment before, or after, the "do work" step.

In essence, it is possible to carry out performance measurements both at the level of actions within an object's execution, or at a higher level of per object execution within frames.

To summarise: an interpreter embodying the present invention can be operable to: a) conduct modified actions - interpreter instruction implementations and runtime system operations that perform profiling actions in addition to execution actions or b) inject profiling actions (special profiling instructions) into the action sequence at relevant points to perform profiling actions without changing the execution actions being measured. Each instruction implementation is supported by the runtime system, whose actions may also be modified for profiling.

Embodiments of the present invention are advantageous in that they provide the capability to gather and report statistics about the execution of a program, in terms of processor time consumed, memory allocated for storage and (in the case of a distributed execution environment) the network performance. The runtime system shown in Figure 1 can therefore be considered to comprise a unified processor, memory and network profiler.

The processor profiler is operable to gather information on the processor time spent in each method of a given program, in each object of the program, in each frame of execution. It is also operable to time the execution time of each frame. To achieve this, OS level high resolution timers (capable of timing extremely short time intervals) are used to time the elapsed time between starting and stopping a timer. The process of timing such activities requires the timer to be begun at the start of the activity, and stopped at the end, and the result recorded.

Thus, the runtime is operable to start a timer on beginning execution of a frame. When the frame is finished, the timer is stopped, and the elapsed time is recorded. The runtime would also start and stop timers on calling and returning from program functions and methods. For the purposes of accounting for execution time, yield statements may be treated as a function return since they cause the cessation of execution until the next frame is executed. The execution instructions that perform function call and return are likely places to insert the profiling code to manage timing.

In the event that the profiler is operating within a multithreaded runtime, care should be taken to ensure that the profiler system is thread-safe. For example, the aggregation of individual times must be thread-safe, to avoid confusing the times of two concurrently executed CSL objects. Each thread in which statistics are gathered would store the gathered data in a central data structure within the interpreter, from which a profile can be reported.

The memory profiler is operable to track the number of concurrent objects and the allocations made by each, in order to determine which objects consume the most memory. To do this, the routines that allocate and free memory will be modified to record increases and decreases in the memory use of an object, both within and throughout a frame. Such a profiler would record the memory usage of a object over time within a frame e.g.

during its execution and at each frame transition.

The network profiler gathers information on the total amount of bandwidth consumed in executing the program. Preferably, this is performed on a per-connection basis, and is operable to track both the kind of communications sent between components, the frequency of communications, the sizes of communications, and the senders and destinations of communications. The networking code of the implementation may be modified to record these metrics, and to store them for later analysis.

All these statistics can be advantageously presented in a unified format to the programmer, to provide both performance overview and a detailed profile of all aspects of a system's performance. Each individual measurement taken may be recorded and kept for use in the report. Alternatively, should the quantity of metrics become too great, aggregates can be calculated and stored, and the individual measurements recorded. The report may be generated from the set of data built up in the course of the program's execution by each of the individual timers and measurements,

Embodiments of the present invention may be implemented by modifying the implementation of portions of the runtime system to include profiling code. For some forms of profiling, notably timing and message related statistics, it would be possible to cause the compilation of the scripting language program to be altered to emit timing instructions at points of interest e.g. after function entry and before function return.

For the sake of completeness, the following explanation provides further details concerning the operation and technical implementation of an execution environment according to embodiments of the present invention.

Each object has a main procedure that is called after the object is created. The main procedure, for example, may contain "next frame" statements. An object is able to modify its own state. However, the modified state cannot be visible to other objects until the next frame starts, so the code will keep a local copy of the object. Only the local copy is modified by the object. This modified local copy is returned by the object at the end of the frame. The execution system will store this returned modified object in a data store provided for the frame, keeping the original object in the data store for the original frame. Therefore, during exaction of frame n, it is necessary to store frame *n-1* and store the results of execution of each object into n. Frame n will not be read until frame *n+1* starts executing.

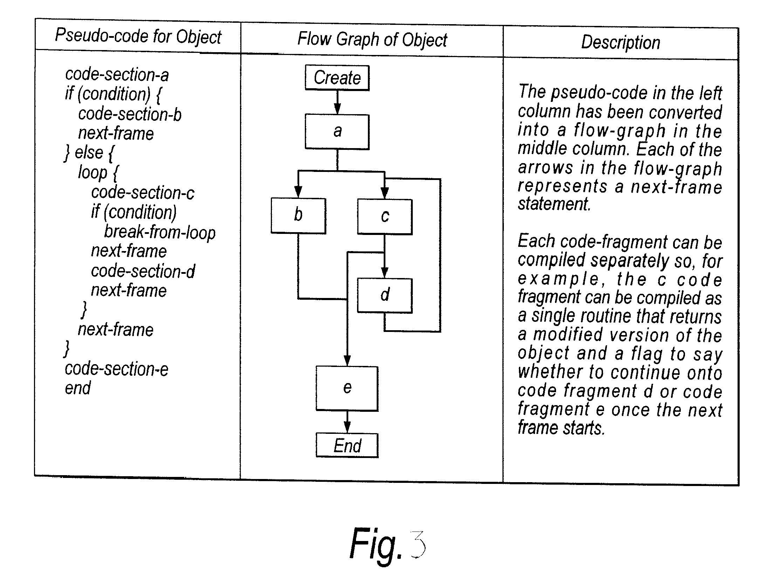

Figure 3 shows a flow diagram of the main procedure for each object. Here, a code fragment is defined as a section of code that: (1) starts with either the object creation or a single next-frame statement, and (2) every exit point on flow-graph is a next-frame statement or the object end, and (3) there are no next-frame statements within any code-fragment. Each code fragment is a function whose inputs are the state of all referenced objects in frame n-1 and all messages from frame n-1 to frame n, and whose return value is the state of the object in frame n and the messages from the object in frame n to frame n+1. Each of the code fragments may be separately compiled into an executable form, although other options are possible. The executable form for each code fragment contains a single entry point, returns a modified version of the object and returns a reference to the code fragment to continue onto once the next frame starts. The executable code fragment cannot modify any data visible to other objects until the next frame starts. In order that data, such as the values of local variables, is preserved from one frame to the next, a stack frame can be created on a heap to store the values of local variables.

Execution is split up into frames. For each frame, the system runs through all the objects in the system and executes each one. It is entirely possible to execute the objects out of order or in parallel. Each object has a state that includes an amount of data for the object and an execution point. When an object is created, the execution point is at the start of the object's main procedure. When execution of the object's main procedure reaches a next-frame statement, then execution of that object stops for this frame. At the end of the frame, the new object state is stored. During execution of an object's code, messages may be created. These must be queued up and attached to a target object. Messages can only be read by the target object on the next frame. The messages may also need to be transmitted over a network as described below. Also, an object might read in messages. The messages must be read in a deterministic order. This is to allow out-of-order and parallel execution on multiple systems. The order can be defined by the system and is not described here. At the end of the frame all unused messages can be discarded. All modified objects are modified and the frame number is increased by 1. Execution can continue onto the next frame.

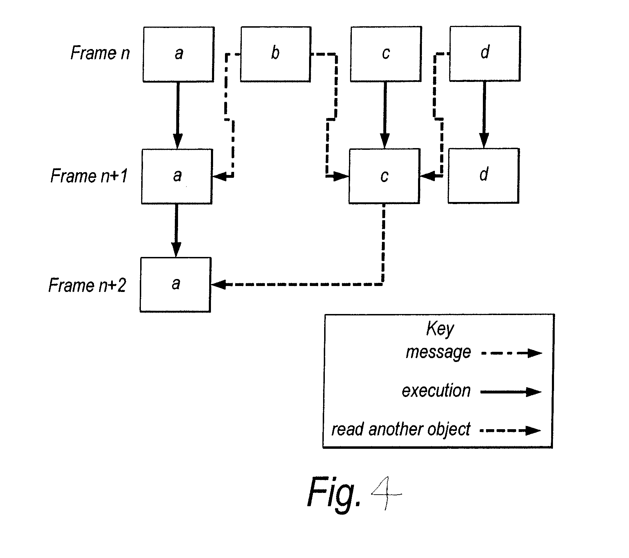

Figure 4 shows the execution of four objects, labelled a to d, by means of a deterministic execution environment according to the present invention. The state in frame n is known and execution of frame n has produced a message from b to a. In frame n+1, object c reads data from objects b and d. In frame n+2, object a reads data from object c. From Figure 1, it can be seen that there is no communication between objects in the same frame. Message dependencies only exist from one frame to the next, while read dependencies only exist from the current frame to the previous frame. This feature is primarily what allows the system to be executed in parallel and over a network. The diagram shows a partial execution in which a is calculated up to frame n+1 and b is ignored. This is to illustrate that it is possible to execute beyond the current consistent network state to calculate a speculative state (which will be based on a mixture of real input data and guessed input data). However, if it is later discovered that b in frame n+1 sends a message to a then, the execution of a in frame n+1 is potentially false and may need to be re-calculated.

The code for each object for each frame can be considered as a function of the value of all the referenced objects in the previous frame and all the messages received by the object. Therefore, if the objects in frame n and the messages from frame n to frame n+1 are consistent throughout the system, then the state of all objects in frame n+1 and the messages from frame n+1 to frame n+2 are just a function of data that is consistent throughout the system. Therefore, the objects will stay consistent as long as the initial state and initial messages are consistent and the functions are executed consistently. In other words, the system is deterministic because all of its causes are known.

To allow a program to be executed within an execution environment of the present invention, it should preferably be suitably structured. To do this, it should be preferably written having regard to the following set of preferred conditions. These preferred conditions restrict what can be written in the language and ensure that program code can be safely distributed across a network. The preferred conditions are as follows:

(1) The program is written in such a way as to be split up into loosely coupled independent computations, each computation having zero or more instances in the execution state at any one time;
(2) Each computation instance has a behaviour (code) and a state (data and execution point);
(3) Execution is divided up into "frames";
(4) For each frame, the system runs through all the computations in the system and executes their code until they get to a "next frame" statement;
(5) Regarding communication between computations, computations may contain references to other computations, may involve reading the state of other computations, may modify their local state, may receive messages from other computations and may send messages to other computations;
(6) Computations cannot directly modify other computations, but may only send messages to computations and read a computation's state;
(7) If a computation changes its state then the change is immediately visible to itself, but is not visible to other computations until the next frame and
(8) Computations can create other computations. The other computations will exist starting with the next frame. For the sake of clarity, the following text will refer to the computations as objects. However, it will be understood that other forms of computation could equally be used.

Having illustrated and described the invention in several embodiments and examples, it should be apparent that the invention can be modified, embodied, elaborated or applied in various ways without departing from the principles of the invention. The invention can be implemented in software programs and data structures stored on portable storage media, transmitted by digital communications, or other transmission medium, or stored in a computer memory. Such programs and data structures can be executed on a computer, to perform methods embodying the invention, and to operate as a machine, or part of apparatus, having the capabilities described herein.

**Claims**

1. A system comprising execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution;
and wherein said execution environment generation means is adapted to obtain performance metrics relating to the performance of program component(s) being executed therein.

2. A system as claimed in claim 1, wherein said performance metrics comprise information about one or more of: processor usage, memory consumption and network performance.

3. A system as claimed in claim 1 or 2, further comprising a data store operable to store the performance metrics therein.

4. A system as claimed in any preceding claim, wherein said execution environment generation means is further adapted to obtain said performance metrics on a per-frame basis.

5. A system as claimed in any preceding claim, wherein said execution environment generation means is further adapted to obtain said performance metrics on a per-component basis.

6. A system as claimed in any preceding claim comprising a plurality of machines which interact with each other via a network, wherein the execution environment is distributed between said plurality of machines.

7. A system as claimed in any preceding claim, wherein the execution environment is operable to only allow communication between components in different frames of execution.

8. A system as claimed in any preceding claim, wherein communication includes at least one of sending a message to another component or reading data from another component.

9. A system as claimed in any preceding claim, wherein communications are processed in a pre-determined order.

10. An execution environment operable to execute one or more components of a computer program in a plurality of sequential frames of execution, wherein the execution environment is operable to: i) allow communication between one said component and another said component in different frames of execution; and ii) to prevent communication between one said component and another said component in the same frame of execution, and wherein said execution environment is further operable to obtain performance metrics relating to the performance of program component(s) being executed therein.

11. A tool for obtaining performance metrics relating to the execution of a computer program, said tool comprising an execution environment generation means configured to generate an execution environment operable to execute one or more components of a computer program in a plurality of sequential frames of execution, wherein the execution environment is further operable to: i) allow communication between one said component and another said component in different frames of execution; and ii) to prevent communication between one said component and another said component in the same frame of execution, wherein said execution environment generation means is adapted to be operable to obtain said performance metrics relating to the performance of said program component(s) being executed therein.

12. A computer readable storage medium having stored thereon a computer program which, when run on one or more computers, causes the computers to perform as a system as claimed in any one of claims 1 to 9.

13. A computer readable storage medium having stored thereon a computer program which, when run on one or more computers, causes the computers to generate the execution environment as claimed in 10.

14. A computer readable storage medium having stored thereon a computer program which, when run on one or more computers, causes the computers to become the tool as claimed in claim 11.

15. A computer program as clamed in any one of claims 12, 13 or 14, carried by a carrier medium.

16. A computer program as claimed in claim 15, wherein said carrier medium is a recording medium.

17. A computer program as claimed in claim 15, wherein said carrier medium is a transmission medium.

Figure 1

Start / End Measurements
For Time or Resource
Values Pre and Post
Action

Periodic Sampling of
Resource Usage

Figure 2

| Pseudo-code for Object | Flow Graph of Object | Description |
|---|---|---|
| code-section-a<br>if (condition) {<br>   code-section-b<br>   next-frame<br>} else {<br>   loop {<br>      code-section-c<br>      if (condition)<br>         break-from-loop<br>      next-frame<br>      code-section-d<br>      next-frame<br>   }<br>   next-frame<br>}<br>code-section-e<br>end | Create → a → (b, c) → d → e → End | The pseudo-code in the left column has been converted into a flow-graph in the middle column. Each of the arrows in the flow-graph represents a next-frame statement.<br><br>Each code-fragment can be compiled separately so, for example, the c code fragment can be compiled as a single routine that returns a modified version of the object and a flag to say whether to continue onto code fragment d or code fragment e once the next frame starts. |

*Fig. 3*

Fig. 4

**European Patent Office**

## EUROPEAN SEARCH REPORT

Application Number

EP 07 12 3233

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SKILLICORN D B ET AL: "Models and languages for parallel computation" ACM COMPUTING SURVEYS, ACM, NEW YORK, NY, US, US, vol. 30, no. 2, 1 June 1998 (1998-06-01), pages 123-169, XP002454722 ISSN: 0360-0300 section 4.3; section 4.4.3 ----- | 1-17 | INV. G06F11/34 |
| Y | US 2005/010608 A1 (HORIKAWA SHIGERU [JP]) 13 January 2005 (2005-01-13) * abstract * * paragraphs [0002], [0009], [0047], [0058] - [0071] * ----- | 1-17 | |

TECHNICAL FIELDS SEARCHED (IPC)

G06F

The present search report has been drawn up for all claims

| Place of search | Date of completion of the search | Examiner |
|---|---|---|
| Munich | 5 May 2008 | Schneider, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 12 3233

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2008

| Patent document cited in search report | | Publication date | Patent family member(s) | | Publication date |
|---|---|---|---|---|---|
| US 2005010608 | A1 | 13-01-2005 | JP | 2005031771 A | 03-02-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0712496 A